(19) Europäisches Patentamt
European Patent Office
Office européen des brevets

(11) Publication number: **0 033 583**
**B1**

# (12) EUROPEAN PATENT SPECIFICATION

(45) Date of publication of patent specification: **12.10.83**

(51) Int. Cl.³: **C 09 B 57/00, D 06 P 1/00**

(21) Application number: **81300071.8**

(22) Date of filing: **08.01.81**

(54) **Dyestuffs comprising two 5-membered heterocyclic nuclei fused to a central cyclohexadiene nucleus, processes for their preparation and their use for colouring synthetic textile materials.**

(30) Priority: **04.02.80 GB 8003667**

(43) Date of publication of application:
**12.08.81 Bulletin 81/32**

(45) Publication of the grant of the patent:
**12.10.83 Bulletin 83/41**

(84) Designated Contracting States:
**BE CH DE FR GB IT LI**

(56) References cited:
**FR - A - 2 343 785**

(73) Proprietor: **IMPERIAL CHEMICAL INDUSTRIES PLC**
**Imperial Chemical House Millbank**
**London SW1P 3JF (GB)**

(72) Inventor: **Greenhalgh, Colin William**
**23 Sefton Drive**
**Worsley Manchester (GB)**
Inventor: **Hall, Nigel**
**23 Underwood Way Shaw**
**Oldham Lancashire (GB)**
Inventor: **Newton, David Francis**
**3 Cotswold Avenue High Crompton**
**Shaw, Nr. Oldham OL2 7RF (GB)**

(74) Representative: **Clark, Peter Frederick et al,**
**Imperial Chemical Industries PLC Legal Department, Patents Thames House North Millbank**
**London SW1P 4QG (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Dyestuffs comprising two 5-membered heterocyclic nuclei fused to a central cyclohexadiene nucleus, processes for their preparation and their use for colouring synthetic textile materials

This invention relates to dyestuffs comprising two 5-membered heterocyclic nuclei fused to a central cyclohexadiene nucleus.

United States Patent Specification No. 4115404 discloses dyestuffs of the general formula:

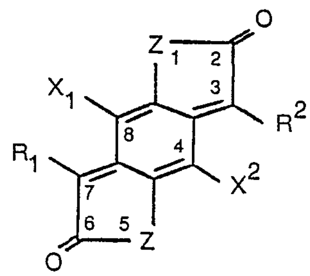

wherein each Z is oxygen or

—NY

in which

Y is an optionally substituted hydrocarbon radical or an acyl radical;

$R^1$ and $R^2$ each independently represent a naphthyl radical, an unsubstituted phenyl radical or a phenyl radical substituted by at least one of the following: nitro, halogen, lower alkyl, lower alkoxy, phenyl, lower alkoxyphenyl, phenoxy, cyano, carboxylic acid, carboxylic acid ester, optionally substituted carbamoyl, sulphonic acid, sulphonyl chloride, sulphonic acid ester, optionally substituted sulphamoyl, mercapto, lower alkylthio, phenyl thio, primary, secondary, tertiary or quaternary amino, acyl amino, phosphonic acid, phosphonic acid ester, lower alkylsulphonyl, phenylsulphonyl, aldehyde, azo, and acyloxy groups of the formula O.— CO.T in which T is an alkyl group containing at least two carbon atoms, a substituted phenyl group, a lower alkoxy group or a phenoxy group; and $X^1$ and $X^2$ each independently represents a hydrogen atom, chlorine, bromine, cyano, lower alkyl, lower alkoxy, optionally substituted carbamoyl, carboxylic acid or carboxylic acid ester group.

According to the present invention there are provided dyestuffs of the general formula (I):

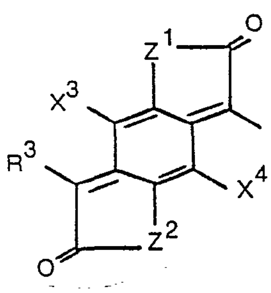

(I)

wherein $Z^1$ and $Z^2$ are oxygen, sulphur or

—$NY^1$

in which $Y^1$ is an optionally substituted hydrocarbon radical or an acyl radical;

$R^3$ and $R^4$ each represent a naphthyl radical, an unsubstituted phenyl radical or a phenyl radical substituted by at least one of the following:— nitro, halogen, lower alkyl, lower alkoxy, phenyl, hydroxy, lower alkoxyphenyl, phenoxy, cyano, carboxylic acid, carboxylic acid ester, optionally substituted carbamoyl, sulphonic acid, sulphonyl chloride, sulphonic acid ester, optionally substituted sulphamoyl, mercapto, lower alkylthio, phenylthio, primary, secondary, tertiary or quaternary amino, acylamino, phosphonic acid, phosphonic acid ester, lower alkylsulphonyl, phenylsulphonyl, aldehyde, azo, and acyloxy groups of the formula O.CO.$T^1$ in which $T^1$ is an alkyl group containing at least two carbon atoms, a substituted phenyl group, a lower alkoxy group or a phenoxy group;

$X^3$ and $X^4$ each independently represent a hydrogen atom, chlorine, bromine, cyano, lower alkyl, lower alkoxy, optionally substituted aryl, optionally substituted carbamoyl, optionally substituted sulphamoyl, carboxylic acid or carboxylic acid ester group.

*provided that* $Z^1$ and $Z^2$ may be the same or different when $R^3$ and $R^4$ are different, and $Z^1$ and $Z^2$ are different when $R^3$ and $R^4$ are the same.

Examples of the optionally substituted hydrocarbon radicals represented by $Y^1$ are alkyl and preferably lower alkyl such as methyl, ethyl, *n*-propyl and isopropyl, substituted alkyl and preferably substituted lower alkyl such as β-hydroxyethyl, β-methoxyethyl and β-ethoxyethyl, phenyl and substituted phenyl such as tolyl, chlorophenyl, nitrophenyl and lower alkoxyphenyl.

Examples of the acyl radicals represented by $Y^1$ are acetyl, propionyl, butyryl, isobutyryl, unsubstituted benzoyl and benzoyl substituted by halogen, nitro, lower alkyl, lower alkoxy or hydroxy.

Examples of acylamino groups which may be present as substituents on the phenyl radicals represented by $R^3$ and $R^4$ are acetylamino, propionylamino, benzoylamino, methanesulphonylamino, benzenesulphonylamino and toluenesulphonylamino.

Examples of substituted phenyl groups represented by $T^1$ are tolyl, chlorophenyl and lower alkoxyphenyl.

Examples of optionally substituted aryl groups represented by $X^3$ and $X^4$ are unsubstituted phenyl and phenyl substituted in *ortho, meta* or *para* positions by halogen, lower alkyl, nitro, lower alkoxy, phenyl or carboxylic acid ester. Two or more such substituents, which may be the same or different, may be present.

The optionally substituted carbamoyl and sulphamoyl groups which may be present as substituents on the phenyl radicals represented by $R^3$ and $R^4$, and which are represented by $X^3$ and $X^4$, are preferably of the formula:

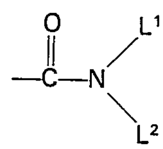 and 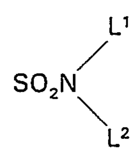 respectively

wherein $L^1$ and $L^2$ are each independently hydrogen, lower alkyl or phenyl. The carboxylic acid ester groups which may be present as substituents on the phenyl radicals represented by $R^3$ and $R^4$, and which are represented by $X^3$ and $X^4$ are preferably of the formula:

$$—COOL^3$$

wherein $L^3$ is an optionally substituted alkyl, in particular lower alkyl or monocyclic aryl, in particular phenyl, radical.

Throughout this specification the terms "lower alkyl" and "lower alkoxy" are used to denote alkyl and alkoxy groups respectively containing from 1 to 4 carbon atoms.

Dyestuffs of the present invention in which $R^3 = R^4$ may be prepared by reaction of 1 mol proportion of a compound of formula (II):

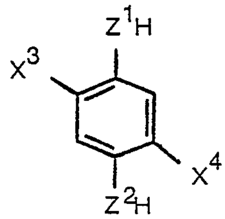

(II)

wherein $X^3$, $X^4$, $Z^1$ and $Z^2$ have the previously defined meanings, with at least 2 mol proportions of a compound of formula (III):

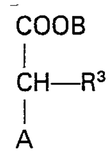

(III)

wherein B is hydrogen, lower alkyl or aryl, A is hydroxyl, O-acyl or halogen, and $R^3$ has the previously defined meaning, either as a melt or in a high-boiling inert solvent such as di- or tri-chlorobenzene.

Specific examples of compounds of formula (II) which may be used are 4-mercaptophenol, 4-acetamidophenol, 4-N-methylaminophenol and 4-N-*iso*propylaminophenol.

Specific examples of compounds of formula (III) which may be used are mandelic acid (α-hydroxyphenylacetic acid), 2- and 4-chloromandelic acid, 4-methylmandelic acid and 4-methoxymandelic acid.

A reaction temperature of 190—195°C is generally satisfactory, although temperatures higher or lower than this may be used in particular circumstances.

The product initially obtained from the above reaction is the dihydro intermediate of formula (IV):

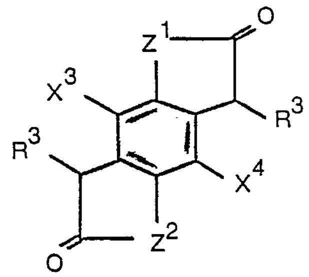

(IV)

which may be isolated if desired, although it is more convenient to oxidise it *in situ*, for example, by heating it in nitrobenzene or by treating it with another oxidising agent such as hydrogen peroxide in acetic acid.

Dyestuffs of formula (I) in which $R^3$ and $R^4$ may be either the same or different may be prepared by the stepwise reaction scheme given below:—

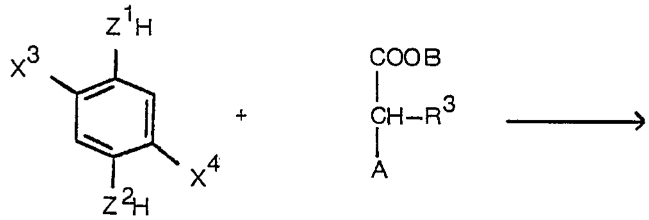

(II) (III)

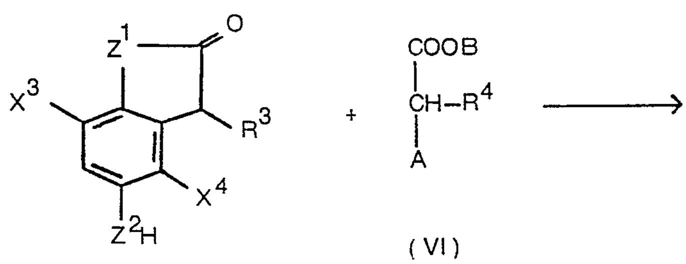

(V) (VI)

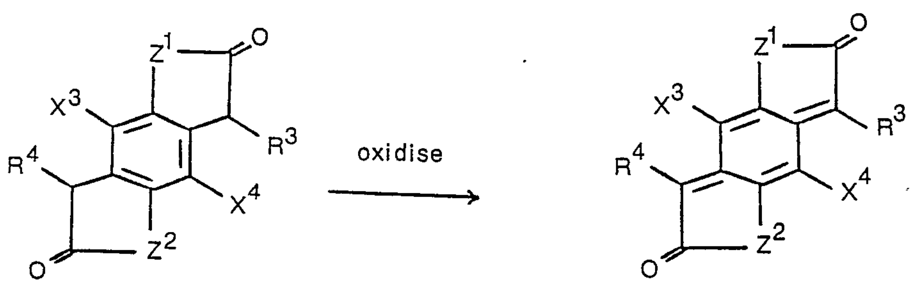


(VII) (I)

in which A, B, $R^3$, $R^4$, $X^3$, $X^4$, $Z^1$ and $Z^2$ have the previously defined meanings.

In a variation of the above scheme dyestuffs of formula (I) in which $R^3$ and $R^4$ are different may be prepared in admixture with dyestuffs in which $R^3$ and $R^4$ are the same by reacting the compound of formula (II) with a mixture of the compound of formula (III) and the compound of formula (VI). In this generalised example it is assumed that $X^3 = X^4$ and $Z^1 = Z^2$. If this is not so then further isomers are possible but components where $R^3$ and $R^4$ are different will be present.

When $Z^1$ and $Z^2$ are both oxygen, dyestuffs in which $R^3$ and $R^4$ are different may also be obtained by reaction of the quinone (VIII)

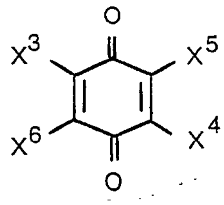

(VIII)

with a compound of the formula (IX):

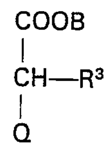

(IX)

in which B, $R^3$, $X^3$ and $X^4$ have the previously defined meanings, Q is hydrogen, hydroxyl or O-acyl and $X^5$ and $X^6$ are hydrogen, chlorine or bromine provided that when Q is hydrogen, at least $X^3$ and $X^4$, or $X^5$ and $X^6$, must be chlorine or bromine,

to give a compound of the formula (X)

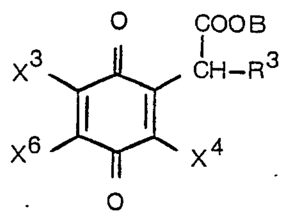

(X)

which is then further reacted with a compound of formula (XI):

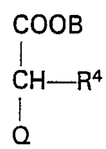

(XI)

wherein B, Q and $R^4$ have the previously defined meanings, to give a compound of the formula (XII):

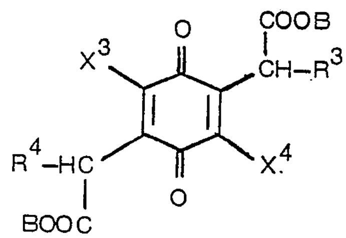

(XII)

which then cyclises with bond rearrangement to give a dyestuff of formula (I) in which $Z^1$ and $Z^2$ are both oxygen.

The dyestuffs in which $R^3$ and $R^4$ are different (regardless of whether $Z^1$ and $Z^2$ are the same or different) have better build-up properties on aromatic polyester textile materials than the corresponding dyestuffs in which $R^3$ and $R^4$ are the same. Similarly the dyestuffs in which $Z^1$ and $Z^2$ are different (regardless of whether $R^3$ and $R^4$ are the same or different) have better build-up properties on aromatic polyester textile materials than the corresponding dyestuffs in which $Z^1$ and $Z^2$ are the same.

Having prepared dyestuffs by the methods of synthesis described above, other substituents can be introduced by conventional methods, or substituents already present can be converted into other substituents in known manner. The following are illustrative of such reactions:—

(a) sulphonic acid groups can be introduced by sulphonation methods, and sulphonyl chloride groups by reaction with chlorosulphonic acid,
(b) nitro groups can be introduced by nitration methods,
(c) hydroxy groups can be converted into acyloxy groups by treatment with acylating agents,

(d) nitro groups can be reduced to amino groups,
(e) amino groups can be converted into acylamino groups by treatment with acylating agents,
(f) tertiary amino groups can be converted into quaternary amino groups.

If desired, the structure of the dyestuff of the present invention can also be incorporated into other dyestuff systems. Thus, for example, dyestuffs containing both the said structure and an azo system can be prepared by coupling a diazotised amino on to a dyestuff of the present invention which contains a phenolic hydroxy group. Alternatively a dyestuff of the present invention which contains a diazotisable amino group can be diazotised and coupled on to a coupling component. Also a dyestuff of the present invention which additionally contains an azo group can be obtained by synthesis of the dyestuff directly from an intermediate which already contains an azo group. As a further example, dyestuffs containing both the structure of the present dyestuffs and a nitro dyestuff system can be obtained by, for example, condensing a dyestuff of the present invention containing an aminophenyl residue with a halogenonitrobenzene.

The dyestuffs of the invention are valuable for colouring natural and synthetic textile materials. Thus the dyestuffs of the invention which are free from water-solubilising groups (i.e. sulphonic acid, carboxylic acid or quaternary ammonium groups) are valuable for colouring synthetic textile materials, for example cellulose acetate and cellulose triacetate textile materials, polyamide textile materials such as polyhexamethyleneadipamide textile materials, polyacrylonitrile textile materials, and preferably aromatic polyester textile materials such as polyethylene terephthalate textile materials. Such textile materials can be in the form of threads, yarn, or woven or knitted fabric. If desired, the said synthetic textile materials can be in the form of blends with other textile materials, for example blends of polyester textile materials with cellulose or woollen textile materials.

Such textile materials can conveniently be coloured with the water-insoluble dyestuffs, as hereinbefore defined, by immersing the textile material in a dyebath comprising an aqueous dispersion of one or more of the said dyestuffs, which dyebath preferably contains a non-ionic, cationic and/or anionic surface-active agent, and thereafter heating the dyebath for a period at a suitable temperature. In the case of secondary cellulose acetate textile materials it is preferred to carry out the dyeing process at a temperature between 60° and 85°C; in the case of cellulose triacetate or polyamide textile materials it is preferred to carry out the dyeing process at 95 to 100°C; in the case of aromatic polyester textile materials the dyeing process can either be carried out at a temperature between 90° and 100°C, preferably in the presence of a carrier such as diphenyl or *o*-hydroxydiphenyl, or at a temperature above 100°C, preferably at a temperature between 120° and 140°C, under superatmospheric pressure.

Alternatively, the aqueous dispersion of the said dyestuff can be applied to the textile material by a padding or printing process, followed by heating at temperatures up to 230°C depending on the textile material, or by steaming of the textile material. In such processes it is preferred to incorporate a thickening agent, such as gum tragacanth, gum arabic or sodium alginate, into the aqueous dispersion of the said azo dyestuff.

At the conclusion of the colouring process it is preferred to give the coloured textile material a rinse in water or a brief soaping treatment before finally drying the coloured textile material. In the case of aromatic polyester textile materials it is also preferred to subject the coloured textile material to a treatment in an aqueous solution of an alkali, such as sodium carbonate or sodium hydroxide, before the soaping treatment in order to remove loosely attached dyestuff from the surface of the textile material.

The water-insoluble dyestuffs have excellent affinity and building-up properties on aromatic polyester textile materials, so enabling deep shades to be obtained. The resulting colorations have good to excellent fastness to light, to wet treatments, to perspiration, and in particular to dry heat treatments such as those carried out at high temperatures during pleating operations.

If desired, the water-insoluble dyestuffs of the invention can be applied to synthetic textile materials in conjunction with other disperse dyes, such as are described in, for example, British Specifications Nos. 806271, 835819, 840903, 847175, 852396, 852493, 859899, 865328, 872204, 894012, 908656, 909843, 910306, 913856, 919424, 944513, 944722, 953887, 959816, 960235, 961412, 976218, 993162 and 998858.

Those dyestuffs of the invention which are soluble in water by virtue of the presence of quaternary ammonium groups can be used as Basic Dyestuffs for the dyeing of polyacrylonitrile textile materials or of polyamide and polyester textile materials which contain acidic groups which confer affinity on such textile materials for Basic Dyestuffs. The said dyestuffs can be applied in conventional manner to these textile materials from acid, neutral or slightly alkaline dyebaths, the pH of which is preferably maintained in the range of 3 to 8, at temperatures between 40°C and 120°C, preferably between 80° and 120°C, or by printing techniques using thickened print pastes containing the said dyestuffs.

Those dyestuffs of the invention which are soluble in water by virtue of the presence of acidic water-solubilising groups can be used for colouring natural or synthetic polyamide textile materials such as wool, silk or polyhexamethylene adipamide textile materials. Such dyestuffs can be applied in conventional manner to the said textile materials from aqueous dyebaths, the pH of which is preferably maintained in the range of 4 to 8.

Those dyestuffs of the invention which contain acidic water-solubilising groups can be used for colouring cellulose textile materials, the dyestuffs being applied by conventional methods to such textile materials.

Dyestuffs of the invention can also be applied to textile materials by transfer printing processes, including such processes carried out at reduced pressures or under moist or humid conditions. Dyestuffs of the invention can also be used in mass colouration processes.

Insoluble dyestuffs of the present invention can also be used as pigments for the colouration of inks and paints, such dyestuffs being incorporated in known manner into conventional ink or paint formulations.

The invention is illustrated by the following Examples in which the parts and percentages are by weight.

Example 1

A mixture of 5.04 parts of 4-mercaptophenol and 14.72 parts of 4-methoxymandelic acid is stirred for 10 hours at 195°C, 8 parts of nitrobenzene are added and the heating continued for a further 30 minutes. The mixture is cooled to 25°C, 150 parts of ethanol are added and the mixture is stirred for 2 hours at 25°C. The precipitated solid is filtered off, washed with ethanol and dried. Crystallisation from toluene gives 3,7-di(4-methoxyphenyl)-2,6-dioxo-2,6-dihydrothieno[2:3-f]benzofuran. [Found: C, 69.5; H, 3.9; S, 7.5. $C_{24}H_{16}O_5S$ requires, C, 69.2; H, 3.85; S, 7.7%]. Mass spectrum showed a terminal ion at m/e = 416. The product dissolves in chloroform to give a red solution having $\lambda$max 523nm, $\varepsilon$max 48,700. When dispersed in aqueous medium the product dyes aromatic polyester textile materials in strong bluish red shades having good fastness to light and to wet treatments. Any unfixed dyestuff on the surface of the textile material is removed by treatment in a 0.6% aqueous solution of sodium hydroxide at 80°C.

Example 2

The procedure described in Example 1 is repeated except that in place of the 14.72 parts of 4-methoxymandelic acid there are used 12.16 parts of mandelic acid, with a reaction time of 16 hours. Crystallisation of the product from 2-ethoxyethanol gives 3,7-diphenyl-2,6-dioxo-2,6-dihydro-thieno[2:3-f]benzofuran. [Found: C, 73.7; H, 3.43; S, 9.1. $C_{22}H_{12}O_3S$ requires C, 74.1; H, 3.37; S, 8.99%]. Mass spectrum shows a terminal ion at m/e = 356 and a breakdown pattern consistent with this structure. The product dissolves in chloroform to give a yellow solution with $\lambda$max 470nm, $\varepsilon$max 45,000. When applied to aromatic polyester textile materials from an aqueous dispersion the product gives strong yellow shades showing good fastness to light.

Example 3

The procedure described in Example 1 is repeated except that in place of the 14.72 parts of 4-methoxymandelic acid there are used 13.28 parts of 4-methylmandelic acid, with a reaction time of 10 hours. Crystallisation of the product from 2-ethoxyethanol gives 3,7-di(4-methylphenyl)-2,6-dioxo-2,6-dihydrothieno[2:3-f]benzofuran. [Found: C, 74.7; H, 4.25; S, 8.5. $C_{24}H_{16}O_3S$ requires C, 75: H, 4.17; S, 8.33%]. Mass spectrum shows a terminal ion at m/e = 384 and a breakdown pattern consistent with this structure. The product dissolves in chloroform to give an orange solution having $\lambda$max 485nm, $\varepsilon$max 35,000. The product gives orange shades with good build-up properties when applied to aromatic polyester textile materials from aqueous dispersions. The dyeings show good fastness properties to light and washing.

Example 4

A mixture of 6.04 parts of 4-acetamidophenol and 12.16 parts of mandelic acid is stirred for 10 hours at 190°C, 8 parts of nitrobenzene are added and heating is continued for a further 30 minutes. The mixture is cooled to 25°C, 150 parts of ethanol are added and the mixture is stirred for 2 hours at 25°C. The precipitated solid is filtered off, washed with ethanol and dried. Crystallisation from 2-ethoxyethanol gives 3,7-diphenyl-2,6-dioxo-2,6-dihydro-5H-furo[2:3-f]indole. [Found: C, 77.4; H, 3.8; N, 4.02. $C_{22}H_{13}O_3N$ requires C, 77.88; H, 3.83; N, 4.13%]. Mass spectrum shows a terminal ion at m/e = 339 and a breakdown pattern consistent with this structure. The product dissolves in chloroform to give a yellow solution having $\lambda$max = 459nm, $\varepsilon$max = 39,000.

A mixture of 4 parts of the above furoindole, 50 parts of acetic anhydride and 1 part of 98% w/v sulphuric acid is stirred and heated under reflux for 2 hours during which time the product gradually precipitates. After cooling the reaction mixture the product is filtered off, washed with alcohol and dried to give 5-acetyl-3,7-diphenyl-2,6-dioxo-2,6-dihydro-5H-furo[2:3-f]indole. [Found: C, 76.1; H, 4.2; N, 3.81. $C_{24}H_{15}O_4N$ requires C, 75.6; H, 3.93; N, 3.67%]. Mass spectrum shows a terminal ion at m/e = 381 and a breakdown pattern consistent with this structure. The product dissolves in chloroform to give a yellow solution having $\lambda$max = 465nm, $\varepsilon$max = 43,300. When applied to aromatic polyester textile materials from an aqueous dispersion the product gives strong yellow shades showing good fastness to light and to wet treatments.

Example 5

The procedure described in Example 4 is repeated except that in place of the 12.16 parts of mandelic acid there are used 14.72 parts of 4-methoxymandelic acid, with a reaction time of 5 hours. Crystallisation of the product from 2-ethoxyethanol gives 3,7-di(4-methoxyphenyl)-2,6-dioxo-2,6-dihydro-5H-furo[2:3-f]indole. Acetylation of this product with acetic anhydride and sulphuric acid gives 5-acetyl-3,7-di(4-methoxyphenyl)-2,6-dioxo-2,6-dihydro-5H-furo[2:3-f]indole. [Found: C, 70.5; H, 4.45; N, 3.19. $C_{26}H_{19}O_6N$ requires C, 70.75; H, 4.31; N, 3.17%]. Mass spectrum shows a terminal ion at m/e = 441 and a breakdown pattern consistent with this structure. The product dissolves in chloroform to give a red solution having λmax 518nm.

Example 6

The procedure described in Example 4 is repeated except that in place of the 12.16 parts of mandelic acid there are used 13.28 parts of 4-methylmandelic acid, with a reaction time of 10 hours. Crystallisation of this product from 2-ethoxyethanol gives 3,7-di(4-methylphenyl)-2,6-dioxo-2,6-dihydro-5H-furo[2:3-f]indole. Acetylation of this product with acetic anhydride and sulphuric acid gives 5-acetyl-3,7-di-(4-methylphenyl)-2,6-dioxo-2,6-dihydro-5H-furo[2:3-f]indole. [Found: C, 75.9; H, 4.70; N, 3.47. $C_{26}H_{19}O_4N$ requires C, 76.28; H, 4.64; N, 3.42%]. Mass spectrum shows a terminal ion at m/e = 409 and a breakdown pattern consistent with this structure. The product dissolves in chloroform to give an orange solution having λmax = 482 nm, εmax = 43,000. When applied to aromatic polyester textile materials from aqueous dispersions the product gives strong orange shades showing good fastness properties to light and to wet treatments.

Example 7

A mixture of 4.92 parts of N-methylaminophenol and 12.16 parts of mandelic acid is stirred for 10 hours at 190°C, 8 parts of nitrobenzene are added and heating is continued for a further 30 minutes. The mixture is cooled to 25°C, 125 parts of methanol are added and the mixture is stirred at 25°C for 2 hours. The precipitated solid is filtered off, washed with methanol and dried. Crystallisation from toluene gives 3,7-diphenyl-2,6-dioxo-5-methyl-2,6-dihydro-5H-furo[2:3-f]indole. [Found: C, 77.9; H, 4.31; N, 4.08. $C_{23}H_{15}O_3N$ requires C, 78.19; H, 4.25; N, 3.97%]. Mass spectrum shows a terminal ion at m/e = 353 and a breakdown pattern consistent with this structure. The product dissolves in chloroform to give a yellow solution having λmax 458nm, εmax 33,200. When applied to aromatic polyester textile materials from aqueous dispersions the product gives yellow shades with good build-up properties and good fastness to light and to wet treatments.

Example 8

The procedure described in Example 7 is repeated except that in place of the 12.16 parts of mandelic acid there are used 14.72 parts of 4-methoxymandelic acid, with a reaction time of 3 hours. Crystallisation from toluene gives 3,7-di(4-methoxyphenyl)-2,6-dioxo-5-methyl-2,6-dihydro-5H-furo[2:3-f]indole. [Found: C, 72.7; H, 4.9; N, 3.31. $C_{25}H_{19}O_5N$ requires C, 72.64; H, 4.6; N, 3.39%]. Mass spectrum shows a terminal ion at m/e = 413 and a breakdown pattern consistent with this structure. The product dissolves in chloroform to give a red solution having λmax 517nm, εmax 37,400. The product dyes aromatic polyester textile materials in bluish-red shades having good build-up properties and showing good fastness to light and to wet treatments.

Example 9

The procedure described in Example 7 is repeated except that in place of the 12.16 parts of mandelic acid there are used 13.28 parts of 4-methylmandelic acid, with a reaction time of 5 hours. Crystallisation of the product from toluene gives 3,7-di(4-methylphenyl)2,6-dioxo-5-methyl-2,6-dihydro-5H-furo[2:3-f]indole. [Found: C, 78.5; H, 5.1; N, 3.63. $C_{25}H_{19}O_3N$ requires C, 78.74, H, 4.99; N, 3.67%]. The mass spectrum shows a terminal ion at m/e = 381 and a breakdown pattern consistent with this structure. The product dissolves in chloroform to give an orange solution having λmax = 475nm, εmax = 41,500. The product dyes aromatic polyester textile materials from aqueous dispersions in orange shades showing good build-up properties and having good fastness to light and to wet treatments.

Example 10

The procedure described in Example 8 is repeated except that in place of the 4.92 parts of 4-N-methylaminophenol there are used 6.04 parts of 4-N-*iso*propylaminophenol, with a reaction time of 1½ hours. Crystallisation of the product from 2-ethoxyethanol gives 3,7-di(4-methoxyphenyl)-2,6-dioxo-5-*iso*propyl-2,6-dihydro-5H-furo[2:3-f]indole. [Found: C, 73.5; H, 5.27; N, 3.09. $C_{27}H_{23}O_5N$ requires C, 73.47; H, 5.21; N, 3.17%]. The mass spectrum shows a terminal ion at m/e = 441 and a breakdown pattern consistent with this structure. The product dissolves in chloroform to give a red solution having λmax 507nm, εmax 41,800. The product gives bluish-red shades on polyester textile materials showing good build-up properties and having good fastness to light and to wet treatments.

Example 11

A mixture of 9.04 parts of 5-hydroxy-2-oxo-3-phenyl-2:3-dihydrobenzofuran and 6.64 parts of 4-methylmandelic acid is stirred for 1½ hours at 195°C, 8 parts of nitrobenzene are then added and heating continued for a further 30 minutes. The mixture is cooled to 25°C, 150 parts of methanol are added and the mixture stirred for 2 hours at 25°C. The precipitated solid is filtered off, washed with methanol and dried. Crystallisation from toluene gives 3-phenyl-7-(4-methylphenyl)-2,6-dioxo-2,6-dihydrobenzo[1:2-b, 4:5-b']difuran. [Found: C, 78.1; H,3.9. $C_{23}H_{14}O_4$ requires C, 77.97; H, 3.95%]. The mass spectrum shows a terminal ion at m/e = 354 and a breakdown pattern consistent with this structure. The product dissolves in chloroform to give an orange solution having λmax 476nm, εmax 50,300. When applied to aromatic polyester textile materials from aqueous dispersions the product gives orange shades with very good build-up and good fastness to light and to wet treatments.

Example 12

The procedure described in Example 11 is repeated except that in place of the 6.64 parts of 4-methylmandelic acid there are used 7.28 parts of 4-methoxymandelic acid, with a reaction time of 2 hours. Crystallisation of the product from toluene gives 3-phenyl-7-(4-methoxyphenyl)-2,6-dioxo-2,6-dihydrobenzo[1:2-b, 4:5-b']difuran. [Found: C, 74.2; H, 3.82. $C_{23}H_{14}O_5$ requires C, 74.59; H, 3.78%]. The product dyes aromatic polyester textile materials from aqueous dispersions in attractive red shades with good build-up properties and showing good fastness to light and to wet treatments. The mass spectrum shows a terminal ion at m/e 370 and a breakdown pattern consistent with this structure. The product dissolves in chloroform to give a red solution having λmax 498nm, εmax 48,900.

Example 13

The procedure described in Example 11 is repeated except that in place of the 6.64 parts of 4-methylmandelic acid there are used 7.46 parts of 2-chloromandelic acid, with a reaction time of 4 hours. Crystallisation of the product from 2-ethoxyethanol gives 3-phenyl-7-(2-chlorophenyl)-2,6-dioxo-2,6-dihydrobenzo[1:2-b, 4:5-b']difuran. [Found: C, 70.48; H, 3.03; Cl, 9.41. $C_{22}H_{11}O_4Cl$ requires C, 70.49; H, 2.94; Cl, 9.28%]. The mass spectrum shows a terminal ion at m/e = 375 and a breakdown pattern consistent with this structure. The product dissolves in chloroform to give a yellow solution having λmax 447nm, εmax 39,900. The product dyes aromatic polyester textile materials in yellow shades with good build-up properties and having good fastness to light and to wet treatments.

Example 14

The procedure described in Example 11 is repeated except that in place of the 6.64 parts of 4-methylmandelic acid there are used 7.46 parts of 4-chloromandelic acid, with a reaction time of 1½ hours. Crystallisation of the product from toluene gives 3-phenyl-7-(4-chlorophenyl)-2,6-dioxo-2,6-dihydrobenzo[1:2-b, 4:5-b']difuran. [Found: C, 70.4; H, 3.1; Cl, 9.1. $C_{22}H_{11}O_4Cl$ requires C, 70.48; H, 3.03; Cl, 9.41%]. The mass spectrum shows a terminal ion at m/e = 375 and a breakdown pattern consistent with this structure. The product dissolves in chloroform to give a yellow solution having λmax 471, εmax 40,000. The product dyes aromatic polyester textile materials in yellow shades with good build-up properties and having good fastness to light and to wet treatments.

Example 15

The procedure described in Example 11 is repeated except that in place of the 6.64 parts of 4-methylmandelic acid there are used 7.28 parts of 2-methoxymandelic acid, with a reaction time of 4 hours. Crystallisation of the product from toluene gives 3-phenyl-7-(2-methoxyphenyl)-2,6-dioxo-2,6-dihydrobenzo[1:2-b, 4:5-b']difuran. [Found: C, 74.03; H, 3.67. $C_{23}H_{14}O_5$ requires C, 74.59; H, 3.78%]. The mass spectrum shows a terminal ion at m/e = 370 and a breakdown pattern consistent with this structure. The product dyes aromatic polyester textile materials in orange shades with good build-up properties and having good fastness to light and to wet treatments.

Example 16

The procedure described in Example 11 is repeated except that in place of the 6.64 parts of 4-methylmandelic acid there are used 7.84 parts of 4-ethoxymandelic acid, with a reaction time of 2 hours. Crystallisation of the product from toluene gives 3-phenyl-7-(4-ethoxyphenyl)-2,6-dioxo-2,6-dihydrobenzo[1:2-b, 4:5-b']difuran. [Found: C 74.7; H 4.2. $C_{24}H_{16}O_5$ requires C 75.0; H 4.16%]. The mass spectrum shows a terminal ion at m/e = 384 and a breakdown pattern consistent with this structure. The product dyes aromatic polyester textile materials in bright red shades with good build-up properties and having good fastness to light and to wet treatment.

Example 17

The procedure described in Example 11 is repeated except that in place of the 6.64 parts of 4-methylmandelic acid there are used 8.4 parts of 4-*n*-propoxymandelic acid, with a reaction time of 2 hours. Crystallisation of the product from toluene gives 3-phenyl-7-(4-*n*-propoxyphenyl)-2,6-dioxo-2,6-dihydrobenzo[1:2-b, 4:5-b']difuran. [Found: C 75.3; H 4.7. $C_{25}H_{18}O_5$ requires C 75.4; H 4.5%]. The

mass spectrum shows a terminal ion at m/e = 398 and a breakdown pattern consistent with this structure. The product dyes aromatic polyester textile materials in bright red shades with good build-up properties and having good fastness to light and to wet treatments.

Example 18

A mixture of 9.6 parts of 5-hydroxy-2-oxo-3-(4-methylphenyl)-2:3-dihydrobenzofuran and 8.4 parts of 4-isopropoxymandelic acid is stirred for 2 hours at 195°C, 8 parts of nitrobenzene are then added and heating is continued for a further 30 minutes. The mixture is cooled to 25°C, 150 parts of ethanol are added and the mixture is stirred for 2 hours at 25°C. The precipitated solid is filtered off, washed with ethanol and dried. Crystallisation from toluene gives 3-(4-methylphenyl)-7-(4-isopropoxyphenyl)-2,6-dioxo-2,6-dihydrobenzo[1:2-b, 4:5-b']difuran. [Found: C 75.6; H 4.8. $C_{26}H_{20}O_5$ requires C 75.73; H 4.85%]. The mass spectrum shows a terminal ion at m/e = 412 and a breakdown pattern consistent with this structure. The product dissolves in chloroform to give a bright red solution having $\lambda$max 513nm, $\varepsilon$max 48,500. When applied to aromatic polyester textile materials from aqueous dispersions the product gives bright red shades with excellent build-up and good fastness to light and wet treatments.

Example 19

A mixture of 10.24 parts of 5-hydroxy-2-oxo-3-(4-methoxyphenyl)-2,3-dihydrobenzofuran and 7.28 parts of 2-methoxymandelic acid is stirred for 3 hours at 195°C, 8 parts of nitrobenzene are then added and heating is continued for a further 30 minutes. The mixture is cooled to 25°C, 150 parts of ethanol are added and the mixture is stirred for 2 hours at 25°C. The precipitated solid is filtered off, washed with ethanol and dried. Crystallisation from 2-ethoxyethanol gives 3-(4-methoxyphenyl) 7-(2-methoxyphenyl)-2,6-dioxo-2,6-dihydrobenzo[1:2-b, 4:5-b']difuran. [Found: C 72.2; H 4.1. $C_{24}H_{16}O_6$ requires C 72.0; H 4.0%]. The mass spectrum shows a terminal ion at m/e = 400 and a breakdown pattern consistent with this structure. The product dye aromatic polyester textile materials in scarlet shades with good build-up properties and having good fastness to light and to wet treatments.

Example 20

A mixture of 9.6 parts of 5-hydroxy-7-methyl-2-oxo-3-phenyl-2,3-dihydrobenzofuran and 7.28 parts of 4-methoxymandelic acid is stirred for 2 hours at 195°C, 8 parts of nitrobenzene are then added and the heating is continued for a further 30 minutes. The mixture is cooled to 25°C, 150 parts of the ethanol are added and the mixture is stirred for 2 hours at 25°C. The precipitated solid is purified by chromatography and subsequent crystallisation from toluene gives 3-phenyl-7-(4-methoxyphenyl)-8-methyl-2,6-dioxo-2,6-dihydrobenzo[1:2-b, 4:5-b']difuran. [Found: C 74.5; H 4.1. $C_{24}H_{16}O_5$ requires C 75.0; H 4.16%]. The mass spectrum shows a terminal ion at m/e = 384 and a breakdown pattern consistent with this structure. The product dissolves in chloroform to give an orange solution having $\lambda$max 474nm. When applied to aromatic polyester textile materials from aqueous dispersions the product gives orange shades with excellent build-up and good fastness to light and wet treatments.

Example 21

The procedure described in Example 20 is repeated except that in place of the 9.6 parts of 5-hydroxy-7-methyl-2-oxo-3-phenyl-2,3-dihydrobenzofuran there are used 11.4 parts of 5-hydroxy-7-methoxycarbonyl-2-oxo-3-phenyl-2,3-dihydrobenzofuran. Crystallisation of the product from toluene gives 3-phenyl-7-(4-methoxyphenyl)-8-methoxycarbonyl-2,6-dioxo-2,6-dihydrobenzo[1:2-b, 4:5-b']difuran. [Found: C 70.0; H 3.6. $C_{25}H_{16}O_7$ requires C 70.1; H 3.73%]. The mass spectrum shows a terminal ion at m/e = 428 and a breakdown pattern consistent with this structure. When applied to aromatic polyester textile materials from aqueous dispersions the product gives bright red shades with excellent build-up and good fastness properties to light and wet treatments.

Example 22

A mixture of 10.64 parts of 5-acetamido-2-oxo-3-phenyl-2,3-dihydroindole and 6.64 parts of 4-methylmandelic acid is stirred for 2 hours at 190°C, 8 parts of nitrobenzene are added and heating is continued for a further 30 minutes. The mixture is cooled to 25°C, 150 parts of acetic anhydride and 2 parts of 98% w/v sulphuric acid are added and the resulting solution is stirred and heated under reflux for 2 hours. After cooling the reaction mixture, the product is filtered off, washed with ethanol and dried to give N,N'-diacetyl-3-(4-methylphenyl)-7-phenyl-2,6-dioxo-1,2,5,6-tetrahydrobenzo[1:2-b 4:5-b']dipyrrole. [Found: C 74.1; H 4.61; N 6.45. $C_{27}H_{20}N_2O_4$ requires C 74.3; H 4.59; N 6.42%]. The mass spectrum shows a terminal ion at m/e = 436 and a breakdown pattern consistent with this structure. When applied to aromatic polyester textile materials from an aqueous dispersion the product gives strong orange shades having good fastness to light and to wet treatments.

Example 23

The procedure described in Example 5 is repeated except that in place of the 6.04 parts of 4-acetamidophenol there are used 8.8 parts of 4-acetamido-2,6-dichlorophenol. Acetylation of this

product with acetic anhydride and sulphuric acid gives 5-acetyl-8-chloro-3,7-di(4-methoxyphenyl)-2,6-dioxo-2,6-dihydro-5H-furo[2:3-f]indole. [Found: C 65.2; H 3.69; N 3.01; Cl 7.52. $C_{26}H_{18}ClNO_6$ requires C 65.61; H 3.78; N 2.95; Cl 7.47%]. The mass spectrum shows a terminal ion at m/e = 475 and a breakdown pattern consistent with this structure. The product dissolves in chloroform to give a red solution having λmax 526nm.

Example 24

A mixture of 10.68 parts of 5-acetamido-2-oxo-3-phenyl-2,3-dihydrobenzofuran and 7.28 parts of 4-methoxymandelic acid is stirred for 4 hours at 185°C, 8 parts of nitrobenzene are added and heating is continued for a further 30 minutes. The mixture is cooled to 25°C, 150 parts of acetic anhydride and 2 parts of 98% w/v sulphuric acid are added and the mixture is then stirred and heated under reflux for 2 hours. Ater cooling the reaction mixture the product is filtered off, washed with ethanol and dried to give 5-acetyl-7-(4-methoxyphenyl)-3-phenyl-2,6-dioxo-2,6-dihydro-5H-furo[2:3-f]indole. [Found: C 73.1; H 4.2; N 3.3. $C_{25}H_{17}NO_5$ requires C 73.0; H 4.14; N 3.4%]. The mass spectrum shows a terminal ion at m/e = 411 and a breakdown pattern consistent with this structure. The product dissolves in chloroform to give a bright red solution having λmax 492nm.

Example 25

A mixture of 1 part of the dyestuff of Example 12 and 20 parts of 98 w/v sulphuric acid is stirred for 1 hour at 25°C. The mixture is poured into a solution of sodium chloride at 0°C and the precipitated solid is filtered off, washed with an aqueous solution of sodium chloride and dried.

Analysis shows that the product consists essentially of the disodium salt of 3-(4-methoxysulphophenyl)-7-(sulphophenyl)-2,6-dioxo-2,6-dihydrobenzo[1:2-b, 4:5-b′]difuran. The resulting product dyes wool and synthetic polyamide textile materials in red shades from an aqueous dyebath.

Example 26

A mixture of 9.04 parts of 5-hydroxy-2-oxo-3-phenyl-2,3-dihydrobenzofuran and 6.72 parts of 4-hydroxymandelic acid is stirred for 1.5 hours at 195°C, 8 parts of nitrobenzene are then added and heating is continued for a further 30 minutes. The mixture is cooled to 25°C, 100 parts of methanol are added and the mixture is stirred for 2 hours at 25°C. The precipitated solid is filtered off, washed with methanol and dried. Crystallisation from 2-ethoxyethanol gives 3-phenyl-7-(4-hydroxyphenyl)-2,6-dioxo-2,6-dihydrobenzo[1:2-b, 4:5-b′]difuran. [Found: C 74.2; H 3.3. $C_{22}H_{12}O_5$ requires C 74.16; H 3.37%].

The mass spectrum shows a terminal ion at m/e = 356 and a breakdown pattern consistent with this structure. The product dissolves in acetone to give a red solution having λmax 499nm, εmax 39,500. When applied to aromatic polyester textile materials from aqueous dispersions the product gives red shades with very good build-up and good fastness to light and to wet treatments.

Example 27

The procedure described in Example 26 is repeated except that in place of the 6.72 parts of 4-hydroxymandelic acid there are used 7.28 parts of 4-hydroxy-3-methylmandelic acid with a reaction time of 2 hours. Crystallisation of the product from 2-ethoxyethanol gives 3-phenyl-7-(4-hydroxy-3-methylphenyl)-2,6-dioxo-2,6-dihydrobenzo[1:2-b, 4:5-b′]difuran. [Found: C 74.4; H 3.5. $C_{23}H_{14}O_5$ requires C 74.59; H 3.78%]. The mass spectrum shows a terminal ion at m/e = 370 and a breakdown pattern consistent with this structure. The product dissolves in acetone to give a red solution having λmax 504 nm, εmax 41,400.

Example 28

A mixture of 9.6 parts of 5-hydroxy-2-oxo-3-(4-methylphenyl)-2,3-dihydrobenzofuran and 8.1 parts of 3-chloro-4-hydroxymandelic acid is stirred for 2 hours at 185°C, 8 parts of nitrobenzene are then added and heating is continued for a further 30 minutes. The mixture is cooled to 25°C, 100 parts of methanol are added and the mixture is stirred for 2 hours at 25°C. The precipitated solid is filtered off, washed with methanol and dried. Crystallisation from methanol gives 3-(3-chloro-4-hydroxyphenyl)-7-(4-methylphenyl)-2,6-dioxo-2,6-dihydrobenzo[1:2-b, 4:5-b′]difuran. [Found: C 68.1; H 3.2; Cl 8.8. $C_{23}H_{13}ClO_5$ requires C 68.23; H 3.21; Cl 8.78%]. The mass spectrum shows a terminal ion at m/e = 404 and a breakdown pattern consistent with this structure.

When applied to aromatic polyester textile materials from aqueous dispersions the product gives bright red shades with very good build-up and good fastness to light and to wet treatments.

Example 29

A mixture of 4.92 parts of 4-N-methylaminophenol and 16.2 parts of 3-chloro-4-hydroxymandelic acid is stirred for 3 hours at 180°C, 8 parts of nitrobenzene are added and heating is continued for a further 30 minutes. The mixture is cooled to 25°C, 100 parts of ethanol are added and the mixture is stirred at 25°C for 2 hours. The precipitated solid is filtered off, washed with ethanol and

dried. Crystallisation from 2-ethoxyethanol gives 3,7-di(3-chloro-4-hydroxyphenyl)-2,6-dioxo-5-methyl-2,6-dihydro-5H-furo[2:3-f]indole. [Found: C 60.7; H 2.7; N 3.1; Cl 15.4. $C_{23}H_{13}Cl_2NO_5$ requires C 60.8; H 2.86; N 3.08; Cl 15.64%]. The mass spectrum shows a terminal ion at m/e = 454 and a breakdown pattern consistent with this structure. The product dissolves in acetone to give a bluish-red solution having $\lambda$max 498 nm. When applied to aromatic polyester textile materials from aqueous dispersions the product gives strong bluish-red shades showing good fastness to light and to wet treatments.

Example 30

A mixture of 7.4 parts of the dyestuff of Example 27, 4.2 parts of $\beta$-naphthoyl chloride, 2.2 parts of triethylamine and 150 parts of dioxan is stirred at 100°C for 1 hour. The precipitated product is filtered off at 100°C, washed separately with dioxan and water and then dried. Analysis shows the product to be 3-phenyl-7-(3-methyl-4-naphth-2-yl-carbonyloxyphenyl)-2,6-dioxo-2,6-dihydrobenzo[1:2-b, 4:5-b']difuran. [Found: C 77.7; H 3.6. $C_{34}H_{20}O_6$ requires C 77.86; H 3:82%]. The mass spectrum shows a terminal ion at m/e = 524 and a breakdown pattern consistent with this structure. The product has very low solubility in organic solvents and when incorporated in known manner into conventional ink or paint formulations orange shades are obtained with high fastness to light.

Example 31

The procedure described in Example 30 is repeated except that in place of the 7.4 parts of the dyestuff of Example 27, there are used 7.4 parts of 3-(4-hydroxyphenyl)-7-(4-methylphenyl)-2,6-dioxo-2,6-dihydrobenzo[1:2-b, 4:5-b']difuran. Analysis shows the product to be 3-(4-methylphenyl)-7-(4-naphth-2-ylcarbonyloxyphenyl)-2,6-dioxo-2,6-dihydrobenzo[1:2-b, 4:5-b']difuran. [Found: C 77.75; H 3.7. $C_{34}H_{20}O_6$ requires C 77.86; H 3.82%]. The mass spectrum shows a terminal ion at m/e = 524 and a breakdown pattern consistent with this structure.

The product has very low solubility in organic solvents and when incorporated in known manner into conventional ink or paint formulations red shades are obtained having high fastness to light.

Example 32

A mixture of 7.12 parts of the dyestuff of Example 1, 2.03 parts of terephthaloyl chloride, 2.2 parts of triethylamine and 200 parts of dimethylformamide is stirred for 1 hour at 110°C. The precipitated product is filtered off at 110°C, washed separately with dimethylformamide and water and then dried.

Analysis shows the product to be 1,4-bis[4-(7-phenyl-2,6-dioxo-2,6-dihydrobenzo[1:2-b, 4:5-b']difur-3-yl)phenoxycarbonyl]benzene. [Found: C 73.9; H 3.12. $C_{52}H_{26}O_{12}$ requires C 74.1; H 3.09%].

The product has low solubility in organic solvents and when incorporated in known manner into conventional ink or paint formulations orange shades are obtained having high fastness to light.

## Claims

1. Dyestuffs of the general formula (I):

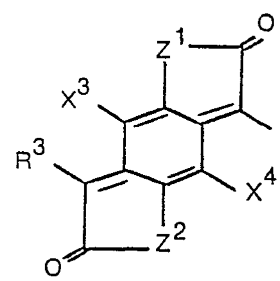

(I)

wherein $Z^1$ and $Z^2$ are oxygen, sulphur or

$-\overset{|}{N}Y^1$

in which $Y^1$ is an optionally substituted hydrocarbon radical or an acyl radical;

$R^3$ and $R^4$ each represent a naphthyl radical, an unsubstituted phenyl radical or a phenyl radical substituted by at least one of the following:— nitro, halogen, $C_1$ to $C_4$ alkyl, $C_1$ to $C_4$ alkoxy, phenyl, hydroxy, $C_1$ to $C_4$ alkoxyphenyl, phenoxy, cyano, carboxylic acid, carboxylic acid ester, optionally substituted carbamoyl, sulphonic acid, sulphonyl chloride, sulphonic acid ester, optionally substituted sulphamoyl, mercapto, $C_1$ to $C_4$ alkylthio, phenylthio, primary, secondary, tertiary or quaternary amino, acrylamino, phosphonic acid, phosphonic acid ester, $C_1$ to $C_4$ alkylsulphonyl, phenylsulphonyl, aldehyde

azo, and acyloxy groups of the formula $O.CO.T^1$ in which $T^1$ is an alkyl group containing at least two carbon atoms, a substituted phenyl group, a $C_1$ to $C_4$ alkoxy group or a phenoxy group;

$X^3$ and $X^4$ each independently represent a hydrogen atom, chlorine, bromine, cyano, $C_1$ to $C_4$ alkyl, $C_1$ to $C_4$ alkoxy, optionally substituted aryl, optionally substituted carbamoyl, optionally substituted sulphamoyl, carboxylic acid or carboxylic acid ester group.

*provided that* $Z^1$ and $Z^2$ may be the same or different when $R^3$ and $R^4$ are different, and $Z^1$ and $Z^2$ are different when $R^3$ and $R^4$ are the same.

2. Dyestuffs as claimed in claim 1 wherein the optionally substituted hydrocarbon radicals represented by $Y^1$ are optionally substituted $C_1$ to $C_4$ alkyl radicals or optionally substituted phenyl radicals.

3. Dyestuffs as claimed in claim 1 or claim 2 wherein the optionally substituted carbamoyl and sulphamoyl groups which may be present as substituents on the phenyl radicals represented by $R^3$ and $R^4$, and which are represented by $X^3$ and $X^4$, are of the formula:

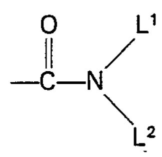 and 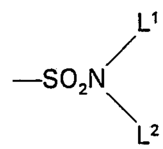

respectively, in which $L^1$ and $L^2$ are each independently hydrogen, $C_1$ to $C_4$ alkyl or phenyl.

4. Dyestuffs as claimed in any one of claims 1 to 3 wherein the carboxylic acid ester groups which may be present as substituents on the phenyl radicals represented by $R^3$ and $R^4$, and which are represented by $X^3$ and $X^4$, are of the formula $—COOL^3$ wherein $L^3$ is an optionally substituted $C_1$ to $C_4$ alkyl or phenyl radical.

5. A process for the preparation of the dyestuffs claimed in claim 1 which comprises reacting 1 mol proportion of a compound of formula (II):

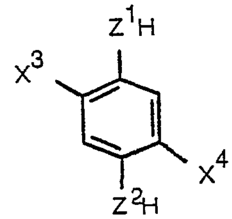

(II)

wherein $X^3$, $X^4$, $Z^1$ and $Z^2$ have the meanings defined in claim 1, with at least 2 mol proportions of a compound of formula (III):

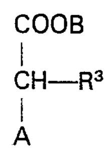

(III)

wherein B is hydrogen, $C_1$ to $C_4$ alkyl or aryl, A is hydroxyl, O-acyl or halogen, and $R^3$ has the meaning defined in claim 1, either as a melt or in a high-boiling inert solvent, to give the intermediate of formula (IV):

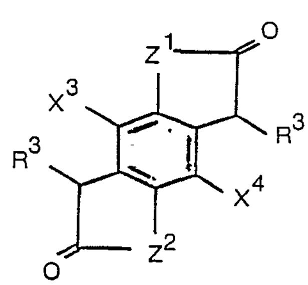

(IV)

which is subsequently oxidised to give the dyestuff of formula (I).

6. A process for the preparation of the dyestuffs claimed in claim 1 which comprises reacting substantially equimolar proportions of the compound of formula (II):

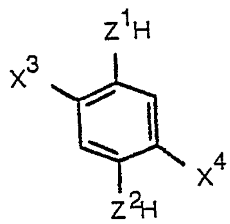

(II)

wherein $X^3$, $X^4$, $Z^1$ and $Z^2$ have the meanings defined in claim 1, and the compound of formula (III):

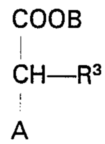

(III)

wherein A and B have the meanings defined in claim 5 and $R^3$ has the meaning defined in claim 1, to give the intermediate of formula (V):

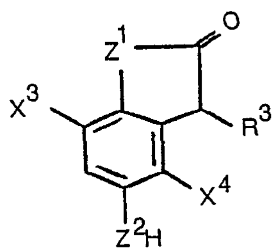

(V)

which is subsequently reacted with 1 mol proportion of the compound of formula (VI):

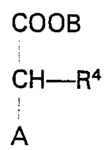

(IV)

wherein A and B have the meanings defined in claim 5 and $R^4$ has the meaning defined in claim 1, to give the intermediate of formula (VII):

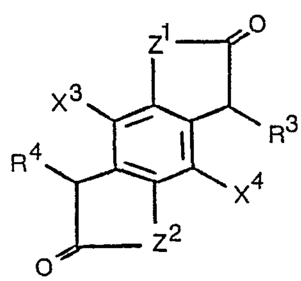

(VII)

which is subsequently oxidised to give the dyestuff of formula (I).

7. A process for the preparation of the dyestuffs claimed in claim 1 wherein $Z^1$ and $Z^2$ are both oxygen which comprises reacting a quinone of formula (VIII):

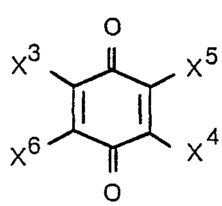

(VIII)

with a compound of the formula (IX):

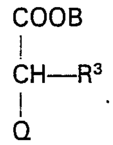

(IX)

in which $R^3$, $X^3$ and $X^4$ have the meanings defined in claim 1, B has the meaning defined in claim 5, $X^5$ and $X^6$ are hydrogen, chlorine or bromine, and Q is hydrogen, hydroxyl or O-acyl, provided that when Q is hydrogen, at least $X^3$ and $X^4$, or $X^5$ and $X^6$ must be chlorine or bromine, to give a compound of formula (X):

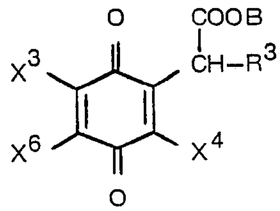

(X)

which is then further reacted with a compound of formula (XI):

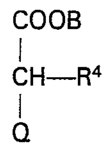

(XI)

wherein B and Q have the meanings defined above and $R^4$ has the meaning defined in claim 1, to give a compound of the formula (XII):

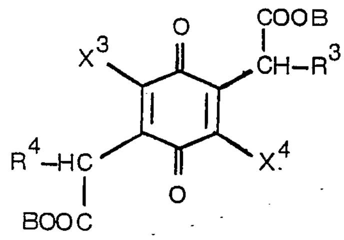

(XII)

which then cyclises with bond rearrangement to give a dyestuff of formula (I).

8. A process for colouring an aromatic polyester textile material which comprises applying to the synthetic textile material by a dyeing, padding or printing process an aqueous dispersion of a dyestuff as claimed in claim 1.

**Patentansprüche**

1. Farbstoffe der allgemeinen Formel (I):

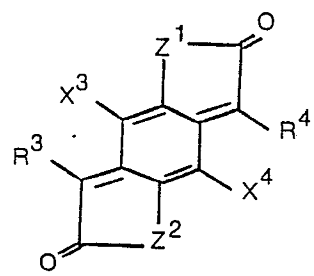

(I)

worin $Z^1$ und $Z^2$ für Sauerstoff, Schwefel oder

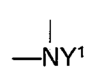

stehen, wobei $Y^1$ ein gegebenenfalls substituiertes Kohlenwasserstoffradikal oder ein Acylradikal ist;

$R^3$ und $R^4$ jeweils für ein Naphthylradikal, ein unsubstituiertes Phenylradikal oder ein durch mindestens einen der folgenden Substituenten substituiertes Phenylradikal stehen: Nitro, Halogen, $C_1$—$C_4$-Alkyl, $C_1$—$C_4$-Alkoxy, Phenyl, Hydroxy, $C_1$—$C_4$-Alkoxyphenyl, Phenoxy, Cyano, Carbonsäure, Carbonsäureester, gegebenenfalls substituiertes Carbamoyl, Sulfonsäure, Sulfonylchlorid, Sulfonsäureester, gegebenenfalls substituiertes Sulfamoyl, Mercapto, $C_1$—$C_4$-Alkylthio, Phenylthio, primäres, sekundäres, tertiäres oder quaternäres Amino, Acylamino, Phosphonsäure, Phosphonsäureester, $C_1$—$C_4$-Alkylsulfonyl, Phenylsulfonyl, Aldehyd, Azo und Acyloxygruppen der Formel $O.CO.T^1$, wobei $T^1$ eine Alkylgruppe mit mindestens zwei Kohlenstoffatomen, eine substituierte Phenylgruppe, eine $C_1$—$C_4$-Alkoxygruppe oder eine Phenoxygruppe ist;

$X^3$ und $X^4$ jeweils unabhängig voneinander für ein Wasserstoff-, Chlor- oder Bromatom oder eine Cyano- $C_1$—$C_4$-Alkyl-, $C_1$—$C_4$-Alkoxy-, gegebenenfalls substituierte Aryl-, gegebenenfalls substituierte Carbamoyl-, gegebenenfalls substituierte Sulfamoyl-, Carbonsäure- oder Carbonsäureestergruppe stehen

mit der Maßgabe, daß $Z^1$ und $Z^2$ gleich oder unterschiedlich sein können, wenn $R^3$ und $R^4$ verschieden sind, und $Z^1$ und $Z^2$ unterschiedlich sind, wenn $R^3$ und $R^4$ gleich sind.

2. Farbstoffe nach Anspruch 1, in denen die durch $Y^1$ dargestellten gegebenenfalls substituierten Kohlenwasserstoffradikale gegebenenfalls substituierte $C_1$—$C_4$-Alkylradikale oder gegebenenfalls substituierte Phenylradikale sind.

3. Farbstoffe nach Anspruch 1 oder 2, in denen die gegebenenfalls substituierten Carbamoyl- und Sulfamoylgruppen, die als Substituenten an den durch $R^3$ und $R^4$ dargestellten Phenylradikalen vorhanden sein können und die durch $X^3$ und $X^4$ dargestellt werden, die Formel

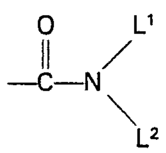 bzw. 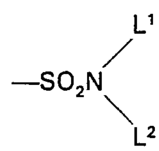

aufweisen, worin $L^1$ und $L^2$ unabhängig voneinander für Wasserstoff, $C_1$—$C_4$-Alkyl oder Phenyl stehen.

4. Farbstoffe nach einem der Ansprüche 1 bis 3, in denen die Carbonsäureestergruppen, die als Substituenten an den durch $R^3$ und $R^4$ dargestellten Phenylradikalen vorhanden sein können und die durch $X^3$ und $X^4$ dargestellt werden, die Formel —$COOL^3$ aufweisen, worin $L^3$ für ein gegebenenfalls substituiertes $C_1$—$C_4$-Alkyl- oder Phenylradikal steht.

5. Verfahren zur Herstellung der Farbstoffe nach Anspruch 1, bei welchem 1 molekular Anteil einer Verbindung der Formel (II):

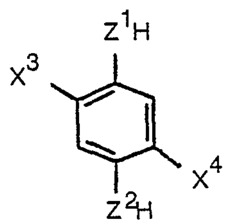

(II)

worin $X^3$, $X^4$, $Z^1$ und $Z^2$ die in Anspruch 1 angegebenen Bedeutungen besitzen, mit mindestens 2 molekularen Anteilen einer Verbindung der Formel (III):

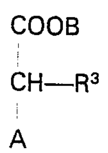

(III)

worin B für Wasserstoff, $C_1$—$C_4$-Alkyl oder Aryl steht, A für Hydroxyl, O-Acyl oder Halogen steht und $R^3$ die in Anspruch 1 angegebene Bedeutung besitzt, entweder als Schmelze oder in einem hochsiedenden inerten Lösungsmittel umgesetzt wird, wobei ein Zwischenprodukt der Formel (IV):

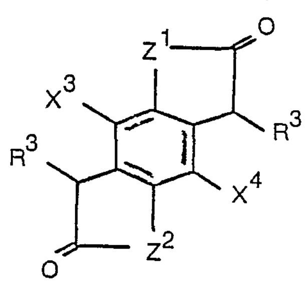

(IV)

erhalten wird, das anschließend in den Farbstoff der Formel (I) oxidiert wird.

6. Verfahren zur Herstellung der Farbestoffe nach Anspruch 1, bei welchem im wesentlichen äquimolekulare Anteile der Verbindung der Formel (II):

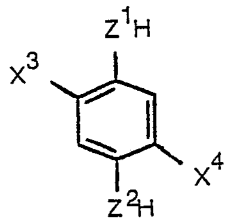

(II)

worin $X^3$, $X^4$, $Z^1$ und $Z^2$ die in Anspruch 1 angegebenen Bedeutungen besitzen, und der Verbindung der Formel (III):

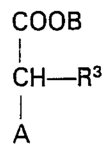

(III)

worin A und B die in Anspruch 5 angegebenen Bedeutungen besitzen und $R^3$ die in Anspruch 1 angegebene Bedeutung besitzt, umgesetzt werden, wobei das Zwischenprodukt der Formel (V):

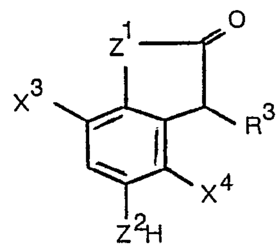

(V)

erhalten wird, das anschließend mit 1 molekularem Anteil der Verbindung der Formel (VI):

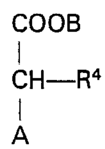

(VI)

worin A und B die in Anspruch 5 angegebenen Bedeutungen besitzen und $R^4$ die in Anspruch 1 angegebene Bedeutun besitzt, umgesetzt wird, wobei das Zwischenprodukt der Formel (VII):

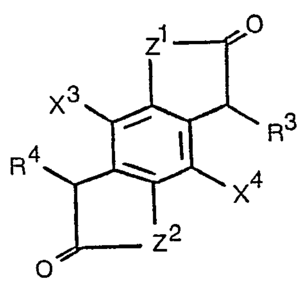

(VII)

erhalten wird, das anschließend in den Farbstoff der Formel (I) oxidiert wird.

7. Verfahren zur Herstellung der Farbstoffe nach Anspruch 1, worin $Z^1$ und $Z^2$ beide für Sauerstoff stehen, bei welchem ein Chinon der Formel (VIII):

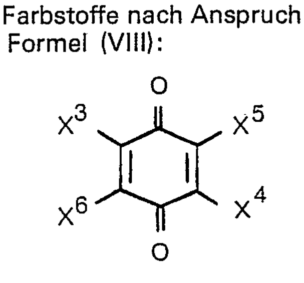

(VIII)

mit einer Verbindung der Formel (IX):

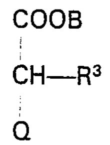

(IX)

umgesetzt wird, wobei $R^3$, $X^3$ und $X^4$ die in Anspruch 1 angegebenen Bedeutungen besitzen, B die in Anspruch 5 angegebene Bedeutung besitzt, $X^5$ und $X^6$ für Wasserstoff, Chlor oder Brom stehen, und Q für Wasserstoff, Hydroxyl oder O-Acyl steht, mit der Maßgabe, daß, wenn Q für Wasserstoff steht, mindestens $X^3$ und $X^4$, oder $X^5$ und $X^6$ Chlor oder Brom sein müssen, wobei eine Verbindung der Formel (X):

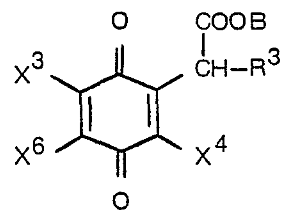

( X)

erhalten wird, die dann weiter mit einer Verbindung der Formel (XI):

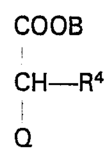

(XI)

worin B und Q die oben angegebenen Bedeutungen besitzen und $R^4$ die in Anspruch 1 angegebene Bedeutung besitzt, umgesetzt wird, wobei eine Verbindung der Formel (XII):

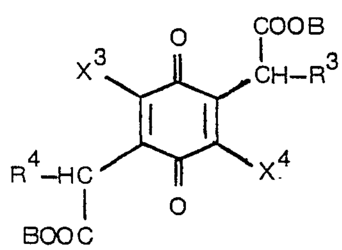

( XII)

erhalten wird, die dann unter Bindungsumlagerung cyclisiert, wobei ein Farbstoff der Formel (I) erhalten wird.

8. Verfahren zum Färben von Textilmaterialien aus einem aromatischen Polyester, bei welchem auf das synthetische Textilmaterial durch eine Färbe-, Klotz- oder Druckverfahren eine wäßrige Dispersion eines Farbstoffs nach Anspruch 1 aufgebracht wird.

**Revendications**

1. Colorants de la formule générale (I):

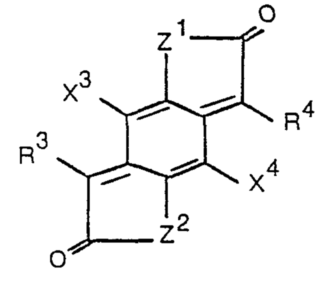

( I)

où $Z^1$ et $Z^2$ représentent un atome d'oxygène ou de soufre ou radical

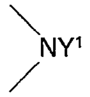

dans lequel $Y^1$ représente un radical hydrocarboné éventuellement substitué ou un radical acyle;

$R^3$ et $R^4$ représentent chacun un radical naphtyle, un radical phényle non substitué ou un radical phényle substitué par au moins un des radicaux suivants: nitro, halogéno, $C_1$—$C_4$-alcoyle, $C_1$—$C_4$-alcoxy, phényle, hydroxyle, ($C_1$—$C_4$-alcoxy)phényle, phénoxy, cyano, acide carboxylique, ester d'acide carboxylique, carbamoyle éventuellement substitué, acide sulfonique, chlorure de sulfonyle, ester d'acide sulfonique, sulfamoyle éventuellement substitué, mercapto, $C_1$—$C_4$-alcoylthio, phénylthio, amino primaire, secondaire, tertiaire ou quaternaire, acylamino, acide phosphonique, ester d'acide phosphonique, $C_1$—$C_4$-alcoylsulfonyle, phénylsulfonyle, aldéhydo, azo et acyloxy de formule $O.CO.T^1$ où $T^1$ est un radical alcoyle comptant au moins 2 atomes de carbone, un radical phényle substitué, un radical $C_1$—$C_4$-alcoxy ou un radical phénoxy;

$X^3$ et $X^4$ représentent indépendamment chacun un atome d'hydrogène, de chlore ou de brome ou un radical cyano, $C_1$—$C_4$-alcoyle, $C_1$—$C_4$-alcoxy, aryle éventuellement substitué, carbamoyle éventuellement substitué, sulfamoyle éventuellement substitué, acide carboxylique ou ester d'acide carboxylique,

avec la restriction que $Z^1$ et $Z^2$ peuvent être identiques ou différents lorsque $R^3$ et $R^4$ sont différents et que $Z^1$ et $Z^2$ sont différents lorsque $R^3$ et $R^4$ sont identiques.

2. Colorants suivant la revendication 1, dans lesquels les radicaux hydrocarbonés éventuellement substitués représentés par $Y^1$ sont des radicaux $C_1$—$C_4$-alcoyle éventuellement substitués ou radicaux phényle éventuellement substitués.

3. Colorants suivant la revendication 1 ou 2, dans lesquels les radicaux carbamoyle et sulfamoyle éventuellement substitués qui peuvent être présents comme substituants sur les radicaux phényle représentés par $R^3$ et $R^4$ et qui sont représentés par $X^3$ et $X^4$ sont des formules:

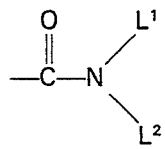 et 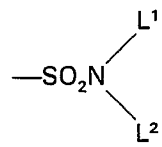

respectivement, où $L^1$ et $L^2$ sont chacun indépendamment un atome d'hydrogène ou radical $C_1$—$C_4$-alcoyle ou phényle.

4. Colorants suivant l'une quelconque des revendications 1 à 3, dans lesquels les radicaux ester d'acide carboxylique qui peuvent être présents comme substituants sur les radicaux phényle représentés par $R^3$ et $R^4$ et qui sont représentés par $X^3$ et $X^4$ sont de la formule —$COOL^3$ où $L^3$ est un radical phényle ou $C_1$—$C_4$-alcoyle éventuellement substitué.

5. Procédé de préparation des colorants suivant la revendication 1, qui comprend la réaction de 1 proportion molaire d'un composé de formule (II):

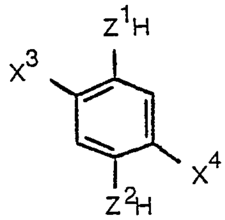

(II)

oú $X^3$, $X^4$, $Z^1$ et $Z^2$ ont les significations définies dans la revendication 1, avec au moins deux proportions molaires d'un composé de formule (III):

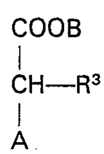

(III)

où B est un atome d'hydrogène ou un radical $C_1$—$C_4$-alcoyle ou aryle, A est un radical hyroxyle, O-acyle ou halogéno et $R^3$ a la signification définie dans la revendication 1, soit à l'état de masse fondue, soit dans un solvant inerte à haut point d'ébullition, pour la formation de l'intermédiaire de formule (IV):

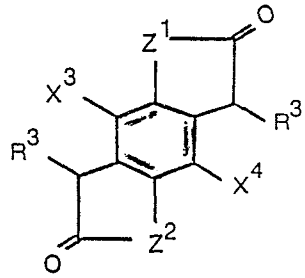

(IV)

qui est ensuite oxydé en le colorant de formule (I).

6. Procédé de préparation des colorants suivant la revendication 1, qui comprend la réaction de proportions sensiblement équimolaires du composé de formule (II):

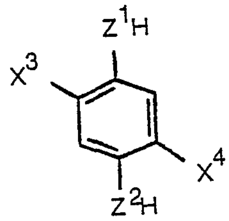

(II)

où $X^3$, $X^4$, $Z^1$ et $Z^2$ ont les significations définies dans la revendication 1, et du composé de formule (III)

COOB
|
CH—$R^3$ (III)
|
A

où A et B ont les significations définies dans la revendication 5 et $R^3$ a la signification définie dans la revendication 1, pour la formation de l'intermédiaire de formule (V):

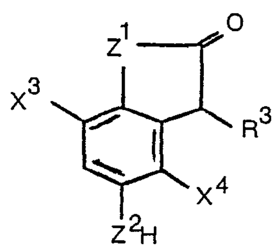

(V)

qui est ensuite mis à réagir avec 1 proportion molaire du composé de formule (VI):

COOB
|
CH—$R^4$ (VI)
|
A

où A et B ont les significations définies dans la revendication 5 et $R^4$ a la signification définie dans la revendication 1, pour la formation du composé intermédiaire de formule (VII):

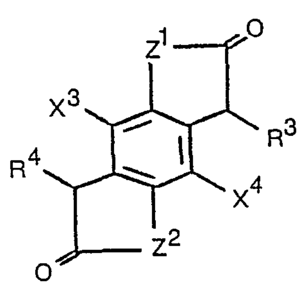

(VII)

qui est ensuite oxydé en le colorant de formule (I).

7. Procédé de préparation des colorants suivant la revendication 1, dans lesquels $Z^1$ et $Z^2$ sont tous deux des atomes d'oxygène, qui comprend la réaction d'une quinone de formule (VIII):

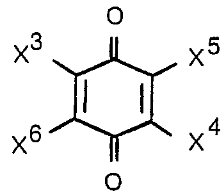

(VIII)

avec un composé de formule (IX):

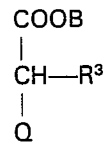

(IX)

où $R^3$, $X^3$ et $X^4$ ont les significations définies dans la revendication 1, B a la signification définie dans la revendication 5, $X^5$ et $X^6$ sont des atomes d'hydrogène, de chlore ou de brome et Q est un atome d'hydrogène ou un radical hydroxyle ou O-acyle, avec la restriction que lorsque Q est un atome d'hydrogène, au moins $X^3$ et $X^4$ ou $X^5$ et $X^6$ doivent être des atomes de chlore ou de brome, pour la formation d'un composé de formule (X):

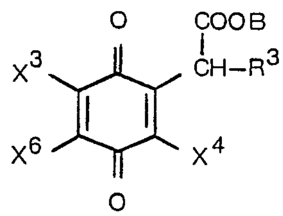

(X)

qui est à son tour mis à réagir avec un composé de formule (XI):

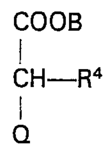

(XI)

où B et Q ont les significations définies ci-dessus et $R^4$ a la signification définie dans la revendication 1, pour la formation d'un composé de formule (XII):

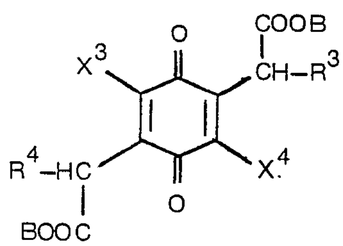

(XII)

qui est ensuite cyclisé avec transposition de liaisons pour la formation d'un composé de formule (I).

8. Procédé de coloration d'une matière textile de polyester aromatique, qui comprend l'application, sur cette matière textile synthétique, suivant une technique de teinture, foulardage ou impression, d'une dispersion aqueuse d'un colorant suivant la revendication 1.